# EUROPEAN PATENT APPLICATION

(11) **EP 1 092 531 A2**
(43) Date of publication of application: **18.04.2001**
(21) Application number: 00122174.6
(22) Date of filing: 12.10.2000
(51) Int. Cl.: B32B 7/04

(54) **Protective sheet material**

(30) Priority: 13.10.1999 GB 9924122
(71) Applicant: JIFFY PACKAGING COMPANY LIMITED, Winsford, Cheshire CW7 3QR (GB)
(72) Inventor: Bowen, James Henry Edward, Rudgwick, Horsham West Sussex RH12 3HG (GB)
(74) Representative: Lally, William

(57) **Abstract**

A protective sheet material comprises a first layer (6) conveniently of paper having a density in the range 40 - 60gsm, and a second, outer layer (8) of paper, having a density in the range 60 - 90gsm bonded to the first layer (6) at the side edges (11a, 11b) thereof to provide an elongate flat tube. Located between the first and second layers (6, 10) is a layer (10) of cushioning material, in the preferred embodiment being in the form of plies (10a, 10b) of free-laying sheets of closed cell polyethelene foam, having a thickness in the range 1 to 2.5mm and having a density in the range 25kg to 30kg/m³.

By virtue of the free-laying nature of the cushioning layer, relative movement between the sheets is permitted as the sheet is wrapped around an article to protect the article preparatory to transportation and/storage, the inner surface of the inner layer providing a high degree of protection to the surface of the article to be protected, whilst the exterior surface of the outer layer protects the article against (eg.) ingress of water, the intermediate cushioning layer protecting the article against impact damage. The material may be provided in the form of "blankets", or may be drawn from a roll.

## Description

This invention is concerned with improvements relating to protective sheet material, particularly of the kind which may be utilised to protect articles, typically during transportation or storage.

Traditionally used as protective sheet material in such circumstances are army blankets, which currently are becoming expensive, and generally unavailable. In substitution therefore, it has become common to use sheets of plastics material, such as polythene foam, or bubble-wrap material. However, conventionally available protective sheet material is in general less capable of protecting an article during transportation or storage than is desirable. For example, bubble material and foam may encourage sweating and condensation, and mark the polished surface of an article, or cause damage.

Alternative available means for the protection of furniture during transportation additionally lacks versatility, and is in general lacking in its capability of protecting certain types of furniture, such as furniture comprising wooden surfaces, in a manner which is wholly acceptable.

Particularly susceptible are aged or antique articles, particularly of wood, where the highly desirable surface finish (patina) is very susceptible to damage during storage or transportation.

Thus in the transportation of articles, there is a great demand for a protective sheet material which in addition to providing adequate protection to articles being transported, does not cause damage such as by marking or scratching the articles being transported, particularly articles of fine furniture such as of wood.

According to this invention there is provided a protective sheet material comprising a first layer, a second layer bonded to the first layer along one or more edge regions, and a cushioning layer located between the first and second layers.

Thus the sheet material may be rectangular, and the first and second layers bonded together on at least opposite sides thereof. In this manner the protective sheet material may be provided in the form of a roll, from which a desired length may be drawn off, and severed from the remainder of the roll.

Alternatively the sheet material may be provided in the form of "blankets", in which case the cushioning layer is located within a pocket defined by the first and second layers.

Conveniently the cushioning layer is freely disposed between the first and second layers, and the relative movement between the various layers which is thus permitted facilitates the wrapping of the protective sheet around the article to be protected. However, if desired, the cushioning layer may be secured to the first and/or second layers, eg. along one edge margin, and/or at discreet areas, such as by spot welding.

If desired, the first and second layers may be of different constitution, conveniently affording inner and outer layers, of which the inner layer may be of a constitution appropriate to engagement with the article to be protected, whilst the outer layer may be of a constitution appropriate to its function.

Thus the inner layer intended to contact the article being protected may be provided by paper of relatively low weight, eg. 40 to 60 gm per square metre (gsm). In this manner, marking of the article may be reduced. Additionally, conveniently the inner layer is provided on an outer surface thereof with a low friction coating which may for example be provided by a layer of polythene, or a spray coating of PTFE, or of wax. In this manner damage to the surface of the article being protected, such as by scratching, may be minimised.

Conveniently the outer layer may be provided by paper of relatively high weight, eg. 60 to 90 gsm, and is conveniently provided on its outer surface with a waterproofing coating, such as a layer of polyethylene, to avoid the article being protected being damaged by water.

Conveniently the cushion layer comprises a resiliently deformable material, and preferably utilised is a closed-cell, high density polyethylene foam.

If desired however, cross-linked polyethylene may be used, or other closed-cell materials, such as polypropylene, polystyrene or polyurethane.

Alternatively or in addition the cushioning layer may comprise "bubble" material, ie. plastics material comprising a base sheet and a bubble layer secured to the base sheet.

Where the protective sheet is utilised to provide light protection, a single cushioning layer may be provided, having a thickness in the range 0.5 to 1.0mm, conveniently about 0.7mm.

Alternatively, particularly where the cushioning material is utilised to provide a higher degree of protection, the cushioning layer may comprise two or more plies, conveniently having a thickness in the range 0.5mm to 3.0mm, and a density in the range 25kg to 30kg/m³, the construction and arrangement being such that relative movement may take place between the plies as the protective sheet is wrapped around the article to be protected.

Alternatively, a single, thicker cushioning layer may be provided, being in the range 5 to 10mm in thickness.

Conveniently if desired an intervening layer such as of paper may be provided between the two plies of the cushioning layer, particularly where the cushioning layer is of bubble wrap material, to provide better capability of the plies sliding over one another during use.

If desired the cushioning material in accordance with this invention may be provided with a wide range of protective capability, being provided for example with anti-corrosive capability, anti-static coatings, antibacterial or fungicidal coatings, water-proofing or flame retardant additives.

Additionally, the outer layer in particular may be provided on its outer surface with appropriate information, such as relating to the nature of the protective material, together with advertising material, safety warnings, environmental messages or advice.

According to this invention there is also provided a protective material comprising a first layer afforded by paper or a paper-like material, and a further layer captive with the first layer and afforded by a cushioning material.

Thus, the first layer may provide a surface providing protection to the surface of the article such as against scratching or condensation, whilst the further layer provides cushioning capability and protecting the article against impact damage.

The first layer may be of Kraft, conveniently having a weight within the range 40 to 90 gsm, and the further layer may comprise one or more sheets of a polymeric foam material, typically polyethylene or polyurethane foam, or bubble-wrap material.

The further layer may be captive with the first layer by virtue of being secured thereto in a manner in which relative movement between the first and further layers is facilitated as the protective sheet material is wrapped around the article such as by being secured together along one edge, or by (for example) spot welding, but may be held captive therewith by virtue of being located between said first layer and a second layer bonded to the first layer along or more edge regions, said further layer or layers being located in a pocket defined between said first and second layers.

There will now be given a detailed description, to be read with reference to the accompanying drawings, of a protective material which is a preferred embodiment of this invention, having been selected for the purposes of illustrating the invention by way of example.

In the accompanying drawings:

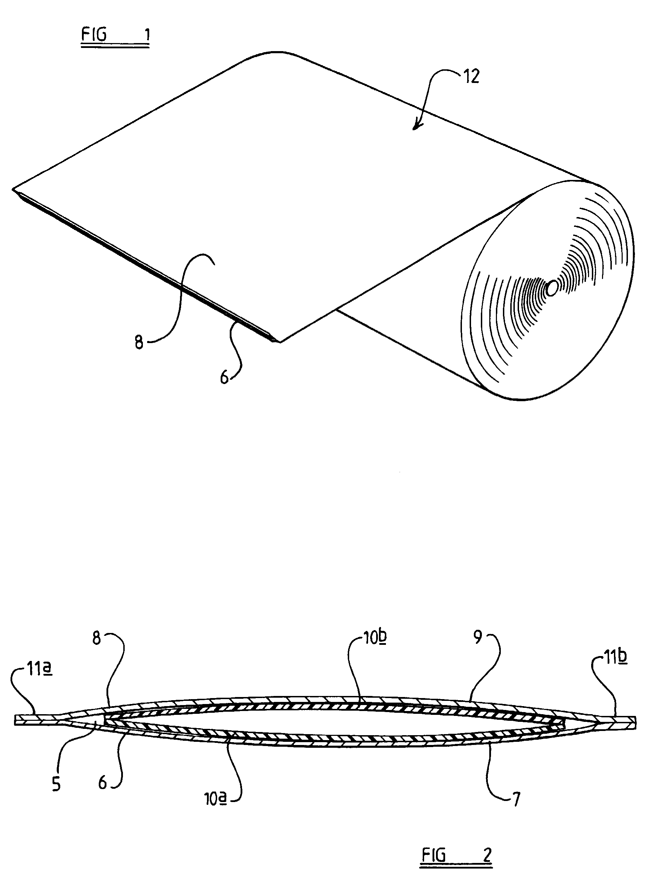

FIGURE 1 is a perspective view showing the protective material which is the preferred embodiment of this invention, in the form of a roll of indefinite length; and
FIGURE 2 is an enlarged cross-sectional view of the protective sheet material.

The protective sheet material which is the preferred embodiment of this invention comprises a first, inner layer 6 conveniently of paper, such as Kraft paper, conveniently in the range 40 to 60 gsm, having a width between 1 and 2 metres, and a second, outer layer 8 of Kraft, having a weight in the range 60 to 90 gsm, bonded to the first layer at the side edges 11a, 11b thereof, to provide an elongate, flat tube.

Located between the first and second layers is a layer 10 of cushioning material, in the preferred embodiment being in the form of plies 10a, 10b of free-laying sheets of closed cell non-cross linked polyethylene foam, conveniently in the region 1 to 2.5mm in thickness and having a density in the range 25kg to 30kg/m³.

Advantageously, the outer surface 7 of the first layer 6 is provided with a non-scratch coating, such as by PTFE or wax, whilst the outer surface 9 of the second layer 8 is provided with a waterproof coating.

The plies 10a, 10b of polythene sheet may be provided most conveniently with a fungicidal spray, and/or fire retardant substances.

An appropriate length of the protective material may be drawn off the roll 12 and severed, and wrapped around the article, being secured in position conveniently by adhesive tape, or may be provided in the form of pre-cut squares, typically 1m x 2m.

It has been found that the protective material above described provides high quality protection to a variety of different types of article during transportation and storage, and in particular provides, by virtue of the cushioning layer, a high degree of protection, and, by virtue of the inner layer, protection for the article against condensation.

During wrapping of the material around the article to be protected, the capability of movement between the various layers reduces "creasing", which may if desired be aided by the provision of a further layer, such as of paper between the two layers of foam.

In the present specification "comprise" means "includes or consists of' and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A protective sheet material comprising a first layer (6), a second layer (8) bonded to the first layer along one or more edge regions (11), and a cushioning layer (10) located between the first and second layers.

2. A protective sheet material according to claim 1 wherein the sheet is rectangular, and the first and second layers (6, 8) are bonded together on at least opposite sides (11a, 11b) thereof, whereby the protective sheet material may be provided in the form of a roll (12), from which a desired length may be drawn off.

3. A protective sheet material according to claim 1 in the form of "blankets", with the cushioning layer (10) located within a pocket (5) defined between the first and second layers (6, 8).

4. A protective sheet material according to any one of the preceding claims wherein the cushioning layer (10) is freely disposed between the first and second layers (6, 8) and the relative movement between the various layers which is thus permitted facilitates the wrapping of the protective sheet around the article to be protected.

5. A protective sheet material according to any one of the preceding claims in which the first and second layers (6, 8) are of different constitution, the first layer affording an inner layer of the material having a constitution appropriate to engagement with the article to be protected, whilst the second layer, affording an outer layer of the material, has a constitution appropriate to its function.

6. A protective sheet material according to any one of the preceding claims wherein the inner layer intended to contact the article being protected is provided by paper of relatively low weight, eg. 40 - 60gsm, and conveniently is provided on an outer surface thereof with a low friction coating.

7. A protective sheet material according to any one of the preceding claims wherein the second layer affords an outer layer of the protective sheet material and is provided by paper of relatively high weight, eg. 60 - 90gsm, and is conveniently provided on its outer surface with a waterproof coating.

8. A protective sheet material according to any one of the preceding claims wherein the cushioning layer comprises two or more plies conveniently having a thickness in the range 0.5 to 3.0mm and having a density in the range 25 to 30kg/m³, the construction and arrangement being such that relative movement may take place between the plies as the protective sheet is wrapped around the article to be protected.

9. A protective sheet material according to claim 8 wherein an intervening layer such as of paper is provided between the two plies of the cushioning layer.

10. A protective sheet material according to any one of the preceding claims, comprising an agent selected to provide for anti-corrosive capability, anti-static capability, anti-bacterial or fungicidal capability, water-proofing or flame retardant capability.

11. A protective material comprising a first layer (6) afforded by paper or paper-like material, and a further layer (10) captive with the first layer and afforded by a cushioning material.

12. A protective material according to claim 11 wherein the first layer (6) provides a surface (7) providing protection to the surface of the article such as against scratching or condensation, whilst the further layer (10) provides cushioning capability protecting the article against impact damage.

13. A protective material according to one of claims 11 and 12 wherein the first layer is of Kraft conveniently having a weight within the range 40 - 90gsm, and a further layer (10) comprising one or more sheets (10a, 10b) of a polymeric foam material.
